# EUROPEAN PATENT SPECIFICATION

(11) **EP 2 918 948 B1**
(45) Date of publication and mention of the grant of the patent: **09.10.2019**
(21) Application number: 13851731.3
(22) Date of filing: 31.10.2013
(51) Int. Cl.: C09K 5/04, F25B 1/00, C10M 171/00, C10M 105/32, C10M 107/24, C10M 129/18, C10M 133/22, C10M 169/04, C10N 30/12, C10N 40/30, F25B 13/00

(54) **REFRIGERATION DEVICE**
KÜHLVORRICHTUNG
DISPOSITIF DE RÉFRIGÉRATION

(30) Priority: 31.10.2012 JP 2012241274
(43) Date of publication of application: 16.09.2015
(73) Proprietor: Daikin Industries, Ltd., Osaka-shi, Osaka 530-8323 (JP)
(72) Inventor: TANAKA, Masaru, Osaka 530-8323 (JP); MATSUURA, Hideki, Osaka 530-8323 (JP); TAIRA, Shigeharu, Osaka 530-8323 (JP); NAKAI, Akinori, Osaka 530-8323 (JP)
(74) Representative: Global IP Europe Patentanwaltskanzlei
(86) International application number: PCT/JP2013/079634
(87) International publication number: WO 2014/069603

(56) References cited:
- WO-A1-2012/026213
- WO-A1-2012/086518
- WO-A1-2012/104893
- JP-A- H06 240 277
- JP-A- 2003 097 441
- JP-A- 2009 191 212
- JP-A- 2011 162 799

## Description

### TECHNICAL FIELD

The present invention relates to a refrigeration apparatus.

### BACKGROUND ART

Conventionally, refrigerator oil used for air-conditioning apparatuses and other refrigeration apparatuses has contained substances for suppressing deterioration of the refrigerator oil and corrosion of expansion valves caused by in hydrofluoric acid and other acids produced by refrigerant decomposition. For example, in the refrigerator oil disclosed in Patent Literature 1 (Japanese Laid-open Patent Application No. 2001-226690), at least 0.05 wt% of an acid scavenger is added.

In addition, conventionally, air-conditioning apparatuses and other refrigeration apparatuses have used R134a which is tetrafluoroethane, R410A and R407C which are mixed refrigerants, and other fluorine-based refrigerants. However, although these fluorine-based refrigerants do not contain chlorine and therefore have little effect of destroying the ozone layer, they strongly impact global warming due to the greenhouse effect. In view of this, R32, represented by the molecular formula CH₂F₂, has recently been attracting attention as a fluorine-based refrigerant having a low global warming potential.

JP 2009 191212 A discloses a refrigeration apparatus comprising a compressor, a condenser, an expansion mechanism, and an evaporator; an amount of water mixed in being controlled to 300 ppm or less relative to an amount of filled refrigerant, refrigerant containing R32 and refrigerator oil for lubricating the compressor being used, the refrigerator oil containing polyvinyl ether oil or polyol ester oil as base oil; and an acid scavenger being blended with the refrigerator oil.

### SUMMARY OF THE INVENTION

### <Technical Problem>

However, relative to R410A, R407C, and other fluorine-based refrigerants, R32 is less stable and, by being exposed to high-temperature environments or being mixed with air and water, decomposes more readily and produces more hydrofluoric acid and other acids by decomposing. There is a risk that the acid produced by refrigerant decomposition will cause the refrigerator oil used in the refrigeration apparatus to degrade, and will corrode expansion valves and other components. On the basis of Patent Literature 1 (Japanese Laid-open Patent Application No. 2001-226690), refrigerator oil deterioration and expansion valve corrosion cannot be suppressed even if 0.05 wt% of an acid scavenger is added to the R32. Note that, the expansion valve may be made of brass or stainless steel, but the corrosion thereof cannot be sufficiently suppressed even when a highly corrosion-resistant stainless steel expansion valve is used.

R32 also has poorer compatibility with refrigerator oil than other fluorine-based refrigerants, causing the refrigerant and the oil to separate more readily. When the refrigerant and the oil separate readily, only poorly lubricating refrigerant is supplied to the sliding parts of a compressor configuring the air-conditioning apparatus, whereby the sliding parts of the compressor produce abnormal amounts of heat, facilitating the production of acid by refrigerant decomposition.

An object of the present invention is to provide a highly reliable refrigeration apparatus in which refrigerator oil deterioration and expansion valve corrosion are suppressed.

### <Solution to Problem>

A refrigeration apparatus according to a first aspect of the present invention comprises a compressor, a condenser, an expansion mechanism, and an evaporator. The amount of air mixed into the refrigeration apparatus is controlled to 500 ppm or less relative to the amount of filled refrigerant. The amount of water mixed into the refrigeration apparatus is controlled to 300 ppm or less relative to the amount of filled refrigerant. The discharged-gas temperature of the refrigeration apparatus is controlled to 120°C or less. The amount of filled refrigerant is the amount of refrigerant with which the refrigerant circuit of the refrigeration apparatus is filled. The discharged-gas temperature is the temperature of high-pressure refrigerant discharged from the compressor. A refrigerant containing R32 and refrigerator oil for lubricating the compressor are used in the refrigeration apparatus. The refrigerator oil contains polyvinyl ether oil or polyol ester oil as base oil. An acid scavenger added in an amount of 1.0 to 5.0 wt% is blended in the refrigerator oil. The refrigerant contains at least 60 wt% of R32.

The refrigeration apparatus according to the first aspect uses a refrigerant containing R32 represented by the molecular formula CH₂F₂. The refrigerant containing R32 is either R32 alone or a mixture refrigerant containing R32. Such an R32-based refrigerant has a lower global warming potential than R410A, R407C, and other fluorine-based refrigerants, but produces a greater amount of hydrofluoric acid and other acids on decomposing. Therefore, an R32-based refrigerant more readily causes refrigerator oil deterioration due to the refrigeration apparatus running for a long time, and corrosion of the expansion valve and other components provided to the refrigeration apparatus. However, the acid scavenger contained in the refrigerator oil has the effect of scavenging the acid produced by refrigerant decomposition. Because the acid scavenger is only added in an amount of 5.0 wt% or less, decreases in the lubrication performance of the refrigerator oil due to excess acid scavenger are suppressed. Therefore, the refrigeration apparatus according to the first aspect can suppress refrigerator oil deterioration and expansion valve corrosion.

A refrigeration apparatus according to a second aspect of the present invention is the refrigeration apparatus according to the first aspect, wherein the acid scavenger added in an amount of 2.0 to 5.0 wt% is blended in the refrigerator oil.

Because the amount of acid scavenger added to the refrigerator oil used by the refrigeration apparatus according to the second aspect is at least 2.0 wt%, refrigerator oil deterioration and expansion valve corrosion are more effectively suppressed.

A reference example of a refrigeration apparatus is the refrigeration apparatus according to the first or second aspect, wherein the expansion mechanism has an expansion valve, and fluorine, which is a decomposition product of the refrigerant adhering to the expansion valve, is detected in an amount of 6.0 wt% or less.

Because the refrigeration apparatus according to the first reference example has a small amount of fluorine as a refrigerant decomposition product adhering to the expansion valve after operation, refrigerator oil deterioration and expansion valve corrosion are more effectively suppressed.

A refrigeration apparatus according to a third aspect of the present invention is the refrigeration apparatus according to the first or second aspect, wherein an extreme pressure agent is further blended with the refrigerator oil.

The refrigerator oil used by the refrigeration apparatus according to the third aspect contains the extreme pressure agent. In the compressor of the refrigeration apparatus, the R32-based refrigerant is used in a state of higher pressure than would be R410A, R407C, and other fluorine-based refrigerants. Therefore, the load imposed on the sliding parts of the compressor which compresses the R32-based refrigerant readily increases, and abrasion and burning readily occur due to a thinner coating of the refrigerator oil formed between sliding member surfaces. The extreme pressure agent is an additive for preventing abrasion and burning of the sliding parts of the compressor of the refrigeration apparatus, by reacting with the sliding member surfaces and forming a coating in the compressor. Therefore, the refrigeration apparatus according to the third aspect can more effectively suppress abrasion and burning of the sliding parts.

A refrigeration apparatus according to a fourth aspect of the present invention is the refrigeration apparatus according to any of the first through third aspects, wherein an antioxidant is further blended with the refrigerator oil.

The refrigerator oil used by the refrigeration apparatus according to the fourth aspect contains an antioxidant. The antioxidant is an additive for suppressing oxidation of the refrigerant and/or the oil due to oxygen. Therefore, the refrigeration apparatus according to the fourth aspect can more effectively suppress refrigerator oil deterioration and expansion valve corrosion.

A refrigeration apparatus according to a fifth aspect of the present invention is the refrigeration apparatus according to any of the first through fourth aspects, wherein the refrigerant contains R32 alone.

A refrigeration apparatus according to a sixth aspect of the present invention is the refrigeration apparatus according to any of the first through fifth aspects, wherein the refrigerator oil is one in which there is no separation in a mixture with the refrigerant during startup.

The mixture of the refrigerant and the refrigerator oil used by the refrigeration apparatus according to the sixth aspect does not separate into two layers of the refrigerator oil and the refrigerant during startup of the refrigeration apparatus. Therefore, the decomposition of refrigerant separated from the mixture of the refrigerant and the refrigerator oil and the production of acid are prevented.

A refrigeration apparatus according to a seventh aspect of the present invention is the refrigeration apparatus according to the sixth aspect, wherein the temperature at which separation occurs in the mixture for which the oil concentration is the minimum value is -35°C or greater, and is also less than the temperature of the mixture when the oil concentration is the minimum value. The oil concentration is the concentration of the refrigerator oil contained in the mixture of the refrigerator oil and the refrigerant. During startup of the refrigeration apparatus, the oil concentration exhibits the minimum value in the process during which the temperature of the mixture rises.

### <Advantageous Effects of Invention>

The refrigeration apparatus according to the first and fifth aspects of the present invention can suppress refrigerator oil deterioration and expansion valve corrosion, and can also suppress decreases in the lubrication performance of the refrigerator oil due to an excess of the acid scavenger.

The refrigeration apparatus according to the second, and fourth aspects of the present invention can more effectively suppress refrigerator oil deterioration and expansion valve corrosion.

The refrigeration apparatus according to the third aspect of the present invention can more effectively suppress abrasion and burning of the sliding parts.

The refrigeration apparatus according to the sixth and seventh aspects of the present invention can prevent the decomposition of refrigerant separated from the mixture of the refrigerant and the refrigerator oil and the production of acid.

### BRIEF DESCRIPTION OF THE DRAWINGS

FIG. 1 is a refrigerant circuit diagram of an air-conditioning apparatus according to an embodiment of the present invention;
FIG. 2 is a graph showing two-layer separation temperature curves of a mixture of R32 refrigerant and polyvinyl ether oil, and the operation locus of the mixture; and
FIG. 3 is a graph showing a two-layer separation temperature curve of a mixture of R32 refrigerant and a polyol ester oil, and the operation locus of the mixture.

### DESCRIPTION OF EMBODIMENTS

### <Embodiments>

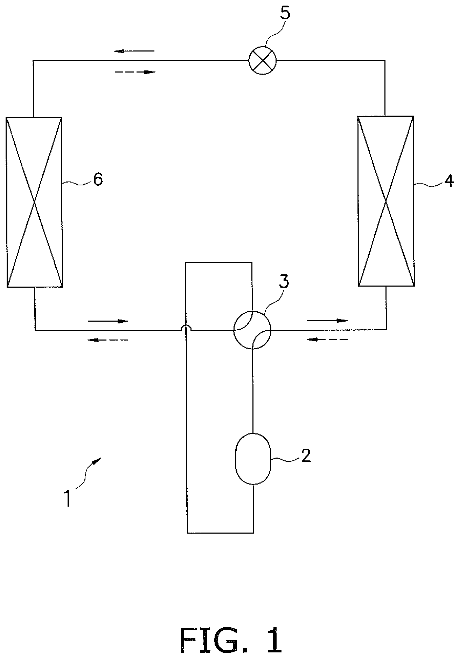

There shall now be described an air-conditioning apparatus 1 as a refrigeration apparatus according to an embodiment of the present invention. FIG. 1 is a refrigerant circuit diagram of the air-conditioning apparatus 1. The air-conditioning apparatus 1 is configured primarily from a compressor 2, a four-way switching valve 3, an outdoor heat exchanger 4, an expansion mechanism 5, and an indoor heat exchanger 6. In FIG. 1, the solid-line arrows represent the flow of refrigerant during an air-cooling operation, and the dashed-line arrows represent the flow of refrigerant during an air-heating operation.

The refrigerating cycle of the air-conditioning apparatus 1 during the air-cooling operation shall now be described. First, the compressor 2 compresses low-pressure gas refrigerant and discharges high-pressure gas refrigerant. The refrigerant discharged from the compressor 2 passes through the four-way switching valve 3 to be supplied to the outdoor heat exchanger 4. The outdoor heat exchanger 4 condenses the high-pressure gas refrigerant and discharges high-pressure liquid refrigerant. The refrigerant discharged from the outdoor heat exchanger 4 passes through an expansion valve of the expansion mechanism 5, becoming low-pressure gas-liquid mixed refrigerant, which is supplied to the indoor heat exchanger 6. The indoor heat exchanger 6 evaporates the low-pressure gas-liquid mixed refrigerant and discharges low-pressure gas refrigerant. The refrigerant discharged from the indoor heat exchanger 6 is supplied to the compressor 2.

During the air-cooling operation, the outdoor heat exchanger 4 functions as a condenser and the indoor heat exchanger 6 functions as an evaporator. That is, the interior of a room is cooled by latent heat of evaporation of the refrigerant as produced in the indoor heat exchanger 6. On the other hand, during the air-heating operation, the four-way switching valve 3 is switched, whereby the outdoor heat exchanger 4 functions as an evaporator and the indoor heat exchanger 6 functions as a condenser. That is, the interior of the room is heated by the latent heat of condensation of the refrigerant as produced in the outdoor heat exchanger 4.

In the present embodiment, an R32-based refrigerant, which is a fluorine-based refrigerant, is used as the refrigerant circulating through the refrigerant circuit of the air-conditioning apparatus 1. An R32-based refrigerant is a refrigerant containing R32. Specifically, the R32-based refrigerant is either R32 alone or a mixed refrigerant containing R32. R32 is represented by the molecular formula CH₂F₂. The mixed refrigerant containing R32 is, for example, a mixed refrigerant containing polyol ester oil or another ester-based refrigerator oil, and a mixed refrigerant containing at least 60 wt% of R32. The mixed refrigerant containing R32 preferably contains HFO-1234yf, HFO-1234ze(E), and other HFO-based refrigerants. The global warming potential of the R32 contained in the mixed refrigerant is preferably 1000 or less, more preferably 500 or less, even more preferably 300 or less, and particularly preferably 100 or less.

Compared with other R410A, R407C, and other fluorine-based refrigerants, R32-based refrigerants have less of an impact on global warming but are less stable, and thus produce more hydrofluoric acid and other acids upon decomposing. The acid produced by refrigerant decomposition causes the refrigerator oil used in the compressor 2 to degrade and corrodes the expansion valve and other components of the expansion mechanism 5.

Specifically, compared with R410A and R407C, R32 has a lower pyrolysis temperature of approximately 600°C, and is decomposed more readily by heat and oxygen. R32 is thermally decomposed by the following reaction formula (I), producing carbene (CH₂) and fluorine ions (F⁻).

CH₂F₂ → CH₂ + 2F⁻ (I)

The carbene produced in reaction formula (I) is oxidized according to the following reaction formula (II), producing formaldehyde, and is further oxidized according to the following reaction formula (III), producing formic acid.

2CH₂ + O₂ → 2HCHO (II)

2HCHO + O₂ → 2HCOOH (III)

The carbene dyad produced in reaction formula (I) produces ethylene (C₂H₄) through a coupling reaction. The ethylene is oxidized by the following reaction formula (IV), producing acetaldehyde, and is further oxidized by the following reaction formula (V), producing acetic acid.

2C2H₄ + O₂ → 2CH₃CHO (IV)

2CH₃CHO + O₂ → 2CH₃COOH (V)

The fluorine ions produced in reaction formula (I) react with the water contained in the refrigerant and the refrigerator oil, producing hydrogen fluoride (HF) through the following reaction formula (VI).

4F⁻ + 2H₂O → 4HF + O₂ (VI)

The R32 also reacts with oxygen through the following reaction formula (VII), producing hydrogen fluoride (HF).

CH₂F₂ + O₂ → CO₂ + 2HF (VII)

As described above, R32 produces hydrogen fluoride (hydrofluoric acid), formic acid, acetic acid, and the like through decomposition. The produced acid dissolves in the water contained in the refrigerant and refrigerator oil and circulates through the refrigerant circuit. When acid adheres to the expansion valve of the expansion mechanism 5, the metal components of the expansion valve corrode, which causes the expansion mechanism 5 to malfunction.

Next, three examples are given of operation modes of the air-conditioning apparatus 1 in which decomposition of the R32 refrigerant readily occurs. The first example is an operation in which the temperature of high-pressure gas refrigerant discharged from the compressor 2 exceeds, e.g., 120°C. At this time, the temperature of the sliding parts inside the compressor 2 will sometimes locally be 600°C or more, in which case the R32 refrigerant may thermally decompose. The second example is an operation performed after a large amount of air has mistakenly gotten mixed in the refrigerant circuit and when the air-conditioning apparatus 1 is installed and maintenance or other work is performed. In this case, the R32 is decomposed by the oxygen contained in the air inside the refrigerant circuit. The third example is an operation performed when liquid refrigerant has returned to the compressor 2 during startup of the air-conditioning apparatus 1, the refrigerator oil and the liquid refrigerant have separated inside the compressor 2, and the liquid refrigerant has been supplied to the sliding parts of the compressor 2. In this case, normal sliding of the sliding parts is hindered by the liquid refrigerant, and as a result, there is a risk of the R32 thermally decomposing due to abnormal heat generation of the sliding parts.

In view of this, the refrigerator oil used in the air-conditioning apparatus 1 contains 1.0 wt% or more of an acid scavenger. The refrigerator oil is a lubricant used in order to prevent abrasion and burning of the sliding parts of the compressor 2. When, for example, the compressor 2 is a scroll compressor, the sliding parts of the compressor 2 are thrust sliding surfaces between the two scrolls, sliding surfaces between the crankshaft and the bearing, and the like. The acid scavenger is an additive used in order to scavenge hydrofluoric acid and other acids produced by the decomposition of the R32-based refrigerant.

Next, the composition of the refrigerator oil used in the present embodiment is described. The refrigerator oil primarily comprises a base oil, an acid scavenger, an extreme pressure agent, and an antioxidant.

A mineral oil or a synthetic oil is used as the base oil. An oil that is highly compatible with the R32-based refrigerant used in the air-conditioning apparatus 1 is selected as appropriate as the base oil. The mineral oil is, for example, a naphthene-based mineral oil or a paraffin-based mineral oil. The synthetic oil is, for example, an ester compound, an ether compound, a poly(α-olefin), or an alkyl benzene. Specific examples of the synthetic oil include a polyvinyl ether, a polyol ester, a polyalkylene glycol, or the like. In the present embodiment, a polyvinyl ether, a polyol ester, or another synthetic oil is preferably used as the base oil. A mixture combining two or more of the mineral oils or synthetic oils described above may also be used as the base oil.

The acid scavenger is an additive used in order to react with hydrofluoric acid and other acids produced by the decomposition of the R32-based refrigerant, thereby suppressing refrigerator oil deterioration caused by the acid. The refrigerator oil contains 1.0 wt% or more of the acid scavenger. The acid scavenger is, for example, an epoxy compound, a carbodiimide compound, or a terpene-based compound. Specific examples of the acid scavenger include 2-ethylhexyl glycidyl ether, phenyl glycidyl ether, epoxidized cyclohexylcarbinol, di(alkylphenyl) carbodiimide, β-pinene, and the like.

The extreme pressure agent is an additive used in order to prevent abrasion and burning of the sliding parts of the compressor 2. The refrigerator oil prevents contact between sliding members by forming an oil film between member surfaces of the sliding parts that slide against each other. However, the sliding members readily come in contact with each other when a low-viscosity refrigerator oil such as polyvinyl ether oil is used and when the pressure exerted on the sliding members is high. The extreme pressure agent suppresses the occurrence of abrasion and burning by reacting with the member surfaces that slide against each other of the sliding parts and forming a coating. The extreme pressure agent is, for example, a phosphate ester, a phosphite, a thiophosphate, a sulfide ester, a sulfide, a thiobisphenol, or the like. Specific examples of the extreme pressure agent include tricresyl phosphate (TCP), triphenyl phosphate (TPP), triphenyl phosphorothioate (TPPT), an amine, a C11-14 side chain alkyl, and monohexyl and dihexyl phosphate. TCP adsorbs to the surfaces of the sliding members and forms a coating of phosphate by decomposing.

The antioxidant is an additive used in order to prevent oxidation of the refrigerator oil. Specific examples of the antioxidant include: zinc dithiophosphate; an organic sulfur compound; 2,6-di-tert-butyl-4-methylphenol, 2,6-di-tert-butyl-4-ethylphenol, 2,2'-methylene bis(4-methyl-6-tert-butylphenol), and other phenols; phenyl-α-naphthylamine, N,N'-di-phenyl-p-phenylene diamine, and other amine-based antioxidants; N,N'-disalicylidene-1,2-diaminopropane; and the like.

In the present embodiment, the hydrofluoric acid and other acids produced by the decomposition of the R32-based refrigerant is scavenged by the acid scavenger, 1.0 wt% or more of which is contained in the refrigerator oil. Deterioration of the refrigerator oil and corrosion of the expansion valve of the expansion mechanism 5, which are caused by the acid produced by the decomposition of the R32-based refrigerant, are thereby suppressed. Corrosion of the other components of the air-conditioning apparatus 1 is also suppressed. Therefore, the reliability of the air-conditioning apparatus 1 is improved by using refrigerator oil in the present embodiment.

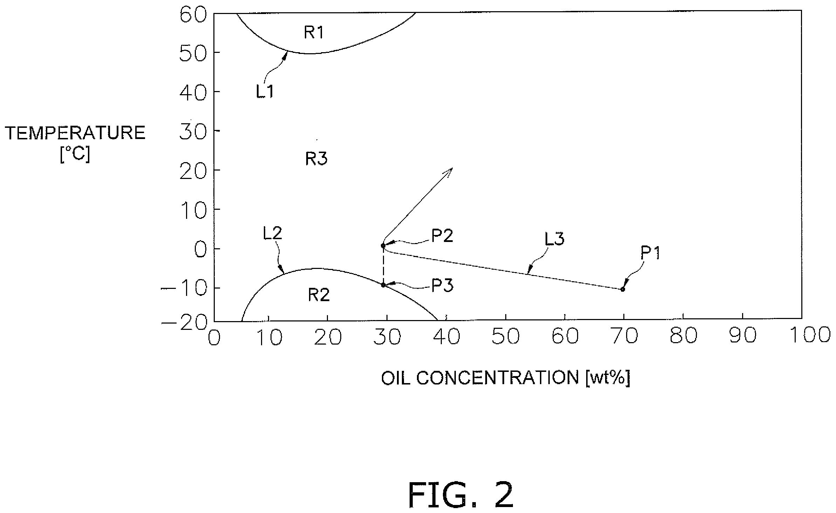

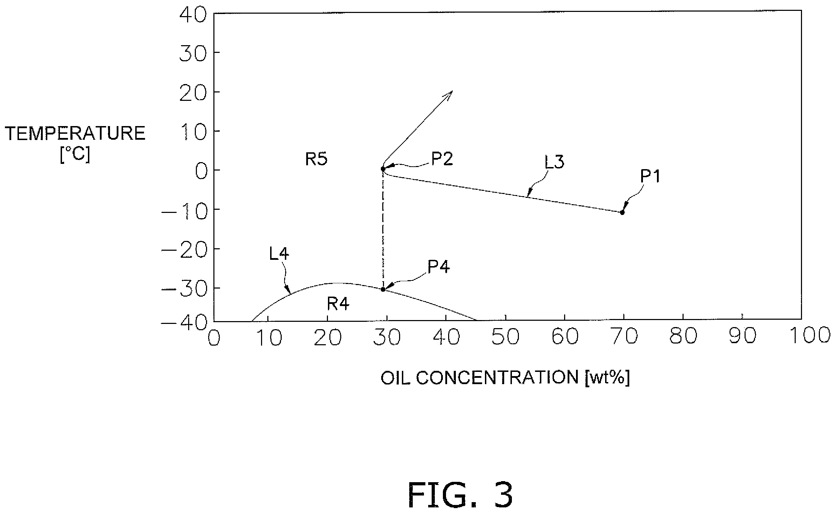

The following is a description, made with reference to FIGS. 2 and 3, of examples of two-layer separation temperature curves of a mixture of R32 refrigerant and refrigerator oil (referred to below simply as "the mixture"), and the operation locus of the mixture.

In FIG. 2, the horizontal axis represents oil concentration, which is the concentration (wt%) of polyvinyl ether oil which is the refrigerator oil contained in the mixture, and the vertical axis represents the temperature of the mixture. The curves L1 and L2 are two-layer separation temperature curves. The area R1 above the top curve L1 and the area R2 below the bottom curve L2 are where the R32 refrigerant and the polyvinyl ether oil separate into two layers. The area R3 between the curve L1 and the curve L2 is where the R32 refrigerant and the polyvinyl ether oil do not separate into two layers. That is, the area R3 is where the R32 refrigerant and the polyvinyl ether oil dissolve with each other.

In FIG. 3, the horizontal axis represents oil concentration, which is the concentration (wt%) of polyol ester oil which is the refrigerator oil contained in the mixture, and the vertical axis represents the temperature of the mixture. The curve L4 is a two-layer separation temperature curve. The area R4 below the curve L4 is an area where the R32 refrigerant and the polyol ester oil separate into two layers. The area R5 above the curve L4 is an area where the R32 refrigerant and the polyol ester oil do not separate into two layers. That is, the area R5 is an area where the R32 refrigerant and the polyol ester oil dissolve with each other.

In FIGS. 2 and 3, the curve L3 represents the operation locus shared by the two mixtures. Specifically, the curve L3 represents the transition of the state of the mixture inside the compressor 2 during startup of the air-conditioning apparatus 1. Before the air-conditioning apparatus 1 starts up, the mixture is in the state of the point P1 of the curve L3. At the point P1, the oil concentration is approximately 70 wt%. When the air-conditioning apparatus 1 starts up, the liquid refrigerant in the refrigerant circuit returns to the compressor 2, and the oil concentration of the mixture therefore decreases. However, as the air-conditioning apparatus 1 thereafter continues to be operated, the temperature of the mixture rises because the temperature of the compressor 2 rises, and the liquid refrigerant contained in the mixture gradually evaporates. As a result, the oil concentration of the mixture increases. That is, during startup of the air-conditioning apparatus 1, the oil concentration has a minimum value because the oil concentration of the mixture increases after having decreased. In FIG. 2, the oil concentration of the mixture is approximately 70 wt% at the point P1 and therefore increases after having decreased to approximately 30 wt% at the point P2. The point P2 indicates the state when the oil concentration is at the minimum value. The temperature of the mixture when the oil concentration thereof is at the minimum value is referred to below as the limit temperature. In FIGS. 2 and 3, the limit temperature is the temperature of the state at the point P2, which is approximately 0°C.

In the present embodiment, the operation locus L3 of the mixture during startup of the air-conditioning apparatus 1 is within the area R3 in FIG. 2 in which the R32 refrigerant and the polyvinyl ether oil do not separate into two layers, and is within the area R5 in FIG. 3 in which the R32 refrigerant and the polyol ester oil do not separate into two layers. Therefore, during startup of the air-conditioning apparatus 1, the mixture does not separate into two layers of the R32 refrigerant and the refrigerator oil. When the mixture does separate into two layers, the separated R32 refrigerant decomposes for the reasons described above, and there is a possibility that the expansion valve of the expansion mechanism 5 will corrode.

In addition, in the present embodiment, the temperature at which the mixture when the oil concentration is at the minimum value separates into two layers of the R32 refrigerant and the refrigerator oil is -35°C or greater and less than the limit temperature. In FIG. 2, the temperature at which the mixture when the oil concentration is at the minimum value separates into two layers is indicated by the point P3, and is approximately -10°C. In FIG. 3, the temperature at which the mixture when the oil concentration is at the minimum value separates into two layers is indicated by the point P4, and is approximately -30°C. When the temperature at which the mixture separates into two layers is equal to or greater than the limit temperature, the point P2 is within the area R2 in FIG. 2 and the point P2 is within the area R4 in FIG. 3, and the mixture could therefore separate into two layers of the R32 refrigerant and the refrigerator oil during startup of the air-conditioning apparatus 1. The temperature at which the mixture of the R32 and the refrigerator oil separates into two layers is higher than the temperature at which a mixture of the refrigerator oil and R410A or R407C would separate into two layers. Therefore, the mixture of the R32 and the refrigerator oil readily separates into two layers during startup of the air-conditioning apparatus 1. Therefore, using refrigerator oil for which the temperature at which the mixture with the R32 refrigerant separates into two layers is less than the limit temperature prevents two-layer separation of the mixture during startup of the air-conditioning apparatus 1 and improves the reliability of the air-conditioning apparatus 1.

Depending on the composition of the refrigerator oil, when the refrigerant is R32, the minimum value of the oil concentration of the mixture of refrigerant and refrigerator oil is 35 ± 10 wt%, and the limit temperature of the mixture is 0 ± 10°C.

### <Examples>

The test results for the refrigerator oil used by the refrigeration apparatus in the present embodiment are described. In the refrigerator oil tests, a product prototype test was performed and the impact of the refrigerator oil on the refrigeration apparatus was analyzed.

In these tests, the refrigeration apparatus was run with varying added amounts of the acid scavenger blended into the refrigerator oil. The state of the brass expansion valve of the expansion mechanism of the refrigeration apparatus was then confirmed. The results of the prototype test are shown in the following Table 1. The test conditions were such that the temperature of the refrigerant gas discharged from the compressor was 120°C, the operating time of the refrigeration apparatus was 2000 hours, and the operating pressure of the refrigeration apparatus was a value set as appropriate. Polyvinyl ether oil was used as the base oil of the refrigerator oil. 0.3 to 5.0 wt% of an acid scavenger was added to the refrigerator oil. The expansion valve after the test was analyzed in terms of its elements by an energy-dispersive X-ray apparatus to confirm the amount of fluorine, a product of refrigerant decomposition.

In Table 1, in a test using R410A as the refrigerant, the amount of fluorine detected was 5.2 wt% and expansion valve corrosion was not confirmed, even when the amount of acid scavenger added was 0.3 wt%. In a test using R32 as the refrigerant, the amount of fluorine detected was 16.7 wt% and expansion valve corrosion was confirmed in "R32-I" in which the amount of acid scavenger added was 0.3 wt%. On the other hand, in "R32-II," "R32-III," R32-IV," and "R32-V," in which the amount of acid scavenger added was from 1.0 to 5.0 wt%, the amount of fluorine detected was 6.0 wt% or less and expansion valve corrosion was not confirmed.

**<Table 1>**

| | R410A | R32-I | R32-II | R32-III | R32-IV | R32-V |
|---|---|---|---|---|---|---|
| Test refrigerant | R410A | R32 | R32 | R32 | R32 | R32 |
| Refrigerator oil | polyvinyl ether | polyvinyl ether | polyvinyl ether | polyvinyl ether | polyvinyl ether | polyol ester |
| Added amount of acid scavenger | 0.3 wt% | 0.3 wt% | 1.0 wt% | 2.0 wt% | 5.0 wt% | 1.0 wt% |
| Detected amount of fluorine from expansion valve | 5.2 wt% | 16.7 wt% | 4.8 wt% | 2.3 wt% | 0.8 wt% | 5.3 wt% |
| Expansion valve satisfactory/unsatisfactory determination | satisfactory | unsatisfactory | satisfactory | satisfactory | satisfactory | satisfactory |

According to Table 1, in a refrigeration apparatus using R32 as the refrigerant, expansion valve corrosion was suppressed when the amount of acid scavenger added in the refrigerator oil was 1.0 wt% or more.

In addition, an experiment was also performed to compare solubility between the polyvinyl ether oil and the R32 refrigerant. As a result, it was confirmed that solubility with R32 improved in accordance with a lower molecular weight of the side chain of the polyvinyl ether. As a specific example, in the chemical structural formula of the polyvinyl ether shown below, an ethyl group (C₂H₅) is connected to a side chain oxygen atom.

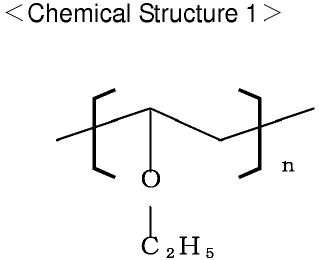

On the other hand, in the chemical structural formula of the polyvinyl ether shown below, a methyl group (CH₃) is connected to a side chain oxygen atom.

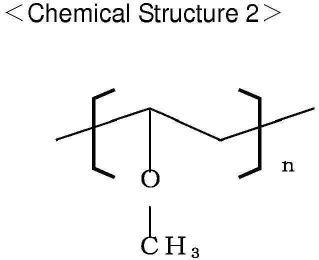

Regarding the above two types of polyvinyl ethers, it was confirmed that a polyvinyl ether having a methyl group is more soluble with the R32 refrigerant than is a polyvinyl ether having an ethyl group. In FIG. 2, the bottom curve L2 moves lower as the solubility between the refrigerator oil and the R32 refrigerant increases. Therefore, during startup of the air-conditioning apparatus 1, the mixture of the refrigerator oil and the R32 refrigerant separates less readily into two layers with higher solubility between the refrigerator oil and the R32 refrigerant. Therefore, regarding the above two types of a polyvinyl ether, refrigerator oil containing a polyvinyl ether having a methyl group separates less readily into two layers with the R32 refrigerant than that containing a polyvinyl ether having an ethyl group. The ISO viscosity grade of the polyvinyl ether oil used in the experiment is VG68.

### <Modifications>

An embodiment and examples of the present invention were described above, but the specific configuration of the present invention can be varied within a range that does not deviate from the scope of the present invention. Below are descriptions of modifications that can be applied to the embodiment of the present invention.

### (1) Modification A

In the present embodiment, the refrigerator oil contains 1.0 wt% or more of an acid scavenger. However, the refrigerator oil preferably contains 5.0 wt% or less of an acid scavenger, and more preferably contains 3.0 wt% or less of an acid scavenger.

### (2) Modification B

In the present embodiment, the refrigerator oil contains an extreme pressure agent and an antioxidant. However, the refrigerator oil may contain either an extreme pressure agent alone or an antioxidant alone, and the refrigerator oil may also exclude both the extreme pressure agent and the antioxidant.

### (3) Modification C

In the examples of the present embodiment, refrigerator oil tests were performed using a brass expansion valve as the expansion valve of the expansion mechanism, but the refrigerator oil tests may be performed using a stainless steel expansion valve. As shall be apparent, expansion valve corrosion is effectively suppressed in this case as well.

### INDUSTRIAL APPLICABILITY

The refrigeration apparatus according to the present invention can suppress refrigerator oil deterioration and expansion valve corrosion.

### REFERENCE SIGNS LIST

- 1: Air-conditioning apparatus (refrigeration apparatus)
- 2: Compressor
- 4: Outdoor heat exchanger (condenser, evaporator)
- 5: Expansion mechanism
- 6: Indoor heat exchanger (evaporator, condenser)

### CITATION LIST

### PATENT LITERATURE

< Patent Literature 1> Japanese Laid-open Patent Application No. 2001-226690
< Patent Literature 2> Japanese Laid-open Patent Application No. 2009 191212

## Claims

1. A refrigeration apparatus (1) comprising a compressor (2), a condenser (4), an expansion mechanism (5), and an evaporator (6);
an amount of water mixed in being controlled to 300 ppm or less relative to an amount of filled refrigerant;
refrigerant containing R32 and refrigerator oil for lubricating the compressor being used, the refrigerator oil containing polyvinyl ether oil or polyol ester oil as base oil; and
an acid scavenger being blended with the refrigerator oil,
**characterized in that**
the amount of air mixed in is controlled to 500 ppm or less relative to the amount of filled refrigerant;
a discharged-gas temperature is controlled to 120°C or less;
the refrigerant contains at least 60 wt% of R32; and
the acid scavenger added in an amount of 1.0 to 5.0 wt% is blended with the refrigerator oil.

2. The refrigeration apparatus according to claim 1, wherein
the acid scavenger added in an amount of 2.0 to 5.0 wt% is blended with the refrigerator oil.

3. The refrigeration apparatus according to claim 1 or 2, wherein
an extreme pressure agent is further blended with the refrigerator oil.

4. The refrigeration apparatus according to any of claims 1 to 3, wherein
an antioxidant is further blended with the refrigerator oil.

5. The refrigeration apparatus according to any of claims 1 to 4, wherein
the refrigerant contains R32 alone.

6. The refrigeration apparatus according to any of claims 1 to 5, wherein
the refrigerator oil is one in which there is no separation in a mixture with the refrigerant during startup.

7. The refrigeration apparatus according to claim 6, wherein
an oil concentration, which is a concentration of the refrigerator oil contained in the mixture, exhibits a minimum value during startup in a process during which a temperature of the mixture rises; and
a temperature at which separation occurs in the mixture for which the oil concentration is the minimum value is -35°C or greater, and is also less than a temperature of the mixture when the oil concentration is the minimum value.

## Patentansprüche

1. Kühlvorrichtung (1) mit einem Verdichter (2), einem Kondensator (4), einem Expansionsmechanismus (5) und einem Verdampfer (6);
wobei eine eingemischte Wassermenge relativ zu einer Menge des eingefüllten Kältemittels auf 300 ppm oder weniger geregelt wird;
wobei das Kältemittel R32 und Kältemaschinenöl zum Schmieren des verwendeten Verdichters enthält, wobei das Kältemaschinenöl Polyvinyletheröl oder Polyolesteröl als Grundöl enthält; und
wobei ein Säurefänger mit dem Kältemaschinenöl gemischt ist,
**dadurch gekennzeichnet, dass**
die eingemischte Luftmenge relativ zur Menge des eingefüllten Kältemittels auf 500 ppm oder weniger geregelt wird;
eine Temperatur des ausgestoßenen Gases auf 120°C oder weniger geregelt wird;
das Kältemittel mindestens 60 Gew.-% R32 enthält; und der in einer Menge von 1,0 Gew.-% bis 5,0 Gew.-% zugegebene Säurefänger mit dem Kältemaschinenöl gemischt ist.

2. Kühlvorrichtung nach Anspruch 1, wobei
der in einer Menge von 2,0 Gew.-% bis 5,0 Gew.-% zugegebene Säurefänger mit dem Kältemaschinenöl gemischt ist.

3. Kühlvorrichtung nach Anspruch 1 oder 2, wobei
ferner ein Extremdruckmittel mit dem Kältemaschinenöl gemischt ist.

4. Kühlvorrichtung nach einem der Ansprüche 1 bis 3, wobei
ferner ein Antioxidationsmittel mit dem Kältemaschinenöl gemischt ist.

5. Kühlvorrichtung nach einem der Ansprüche 1 bis 4, wobei das Kältemittel nur R32 enthält.

6. Kühlvorrichtung nach einem der Ansprüche 1 bis 5, wobei das Kältemaschinenöl eines ist, in dem es während des Anlaufens keine Trennung in einer Mischung mit dem Kältemittel gibt.

7. Kühlvorrichtung nach Anspruch 6, wobei
eine Ölkonzentration, die eine Konzentration des in der Mischung enthaltenen Kältemaschinenöls ist, während des Anlaufens in einem Prozess, während dem eine Temperatur der Mischung steigt, einen Minimalwert aufweist; und
eine Temperatur, bei der eine Trennung in der Mischung stattfindet, für die die Ölkonzentration den Minimalwert aufweist, -35°C oder mehr beträgt, und außerdem kleiner als eine Temperatur der Mischung ist, wenn die Ölkonzentration den Minimalwert aufweist.

## Revendications

1. Dispositif de réfrigération (1) comprenant un compresseur (2), un condensateur (4), un mécanisme de détente (5) et un évaporateur (6) ;
la quantité d'eau mélangée étant fixée à 300 ppm ou moins par rapport à la quantité de réfrigérant versé ;
le réfrigérant contenant du R32 et de l'huile pour machine frigorifique afin de lubrifier le compresseur en cours d'utilisation, l'huile pour machine frigorifique contenant de l'huile d'éther de polyvinyle ou de l'huile d'ester de polyol en tant qu'huile de base ; et
un capteur d'acide mélangé à l'huile pour machine frigorifique,
**caractérisé en ce que**
la quantité d'air mélangé est fixée à 500 ppm ou moins par rapport à la quantité de réfrigérant versé ;
une température de gaz refoulé est fixée à 120 °C ou moins ;
le réfrigérant contient au moins 60 % en poids de R32 ; et le capteur d'acide ajouté dans une teneur comprise entre 1,0 et 5,0 % en poids est mélangé à l'huile pour machine frigorifique.

2. Dispositif de réfrigération selon la revendication 1, où le capteur d'acide ajouté dans une teneur comprise entre 2,0 et 5,0 en poids est mélangé à l'huile pour machine frigorifique.

3. Dispositif de réfrigération selon la revendication 1 ou la revendication 2, où
un agent de pression extrême est également mélangé à l'huile pour machine frigorifique.

4. Dispositif de réfrigération selon l'une des revendications 1 à 3, où
un antioxydant est également mélangé à l'huile pour machine frigorifique.

5. Dispositif de réfrigération selon l'une des revendications 1 à 4, où
le réfrigérant ne contient que du R32.

6. Dispositif de réfrigération selon l'une des revendications 1 à 5, où
l'huile pour machine frigorifique est du type à ne présenter aucune séparation dans un mélange avec le réfrigérant pendant le démarrage.

7. Dispositif de réfrigération selon la revendication 6, où une concentration d'huile qui est une concentration de l'huile pour machine frigorifique contenue dans le mélange, présente une valeur minimale pendant le démarrage lors d'un processus pendant lequel une température du mélange s'élève ; et
une température où une séparation a lieu dans le mélange pour lequel la concentration d'huile est à la valeur minimale, est égale ou supérieure à -35 °C, et est également inférieure à une température du mélange quand la concentration d'huile est à la valeur minimale.
